(19) Europäisches Patentamt / European Patent Office / Office européen des brevets

(11) **EP 4 052 073 B1**

(12) **FASCICULE DE BREVET EUROPEEN**

(45) Date de publication et mention de la délivrance du brevet:
**04.12.2024 Bulletin 2024/49**

(21) Numéro de dépôt: **20792672.6**

(22) Date de dépôt: **22.10.2020**

(51) Classification Internationale des Brevets (IPC):
**G02B 5/18** (2006.01)    **G02B 21/00** (2006.01)
**G02B 27/58** (2006.01)    **G01N 21/64** (2006.01)

(52) Classification Coopérative des Brevets (CPC):
**G02B 5/1819; G01N 21/6458; G01N 21/648;**
**G02B 5/1861; G02B 21/0076;** G02B 21/0072;
G02B 27/58

(86) Numéro de dépôt international:
**PCT/EP2020/079768**

(87) Numéro de publication internationale:
**WO 2021/083787 (06.05.2021 Gazette 2021/18)**

(54) **ELEMENT OPTIQUE DIFFRACTIF COMPRENANT UNE METASURFACE POUR LA MICROSCOPIE TIRF**

DIFFRAKTIVES OPTISCHES ELEMENT MIT EINER METAOBERFLÄCHE FÜR DIE TIRF-MIKROSKOPIE

DIFFRACTIVE OPTICAL ELEMENT COMPRISING A METASURFACE FOR TIRF MICROSCOPY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2019 FR 1912054**

(43) Date de publication de la demande:
**07.09.2022 Bulletin 2022/36**

(73) Titulaires:
- **Centre national de la recherche scientifique**
  **75016 Paris (FR)**
- **Université Paris-Saclay**
  **91190 Gif-sur-Yvette (FR)**

(72) Inventeurs:
- **GIACOMOTTI, Alejandro**
  **92140 CLAMART (FR)**
- **BOUCHOULE, Sophie**
  **94800 VILLEJUIF (FR)**
- **GORTARI, Antu Nehuen**
  **75014 PARIS (FR)**

(74) Mandataire: **IPAZ**
**Bâtiment Platon**
**Parc Les Algorithmes**
**91190 Saint-Aubin (FR)**

(56) Documents cités:
**WO-A1-2010/032157    WO-A2-2014/003529**

- **BERNARDO S MENDOZA ET AL: "Tailored Optical Polarization in Nano-Structured Metamaterials", ARXIV.ORG, CORNELL UNIVERSITY LIBRARY, 201 OLIN LIBRARY CORNELL UNIVERSITY ITHACA, NY 14853, 4 April 2016 (2016-04-04), XP080693043**

## Description

### Domaine technique :

[La présente invention concerne le domaine de la microscopie TIRF (ou microscopie de fluorescence par réflexion totale interne).

### Technique antérieure :

Par la suite, on appellera métasurface un composant comprenant une répétition périodique ou quasi périodique d'un motif élémentaire, de dimension et de période inférieure à une longueur d'onde d'un rayonnement incident et diffusant ledit rayonnement incident en modifiant sa phase et son amplitude.

La microscopie de fluorescence à onde évanescente (TIRF, de l'anglais « Total Internal Reflection Fluorescence ») est une technique de microscopie de fluorescence dans laquelle l'excitation des molécules fluorescentes contenues dans l'échantillon observé est confinée à une région d'épaisseur nanométrique, située à proximité immédiate de la lamelle porte-échantillon. Elle permet, en particulier, d'observer de manière sélective des structures et processus localisés sur une membrane cellulaire, avec une résolution spatiale dans une direction axiale bien meilleure que la limite de diffraction. En outre, par rapport aux techniques d'épi-fluorescence plus conventionnelles, elle permet d'obtenir un meilleur contraste de l'image de fluorescence et de réduire les effets de photo-blanchiment et des dégâts d'irradiation des cellules.

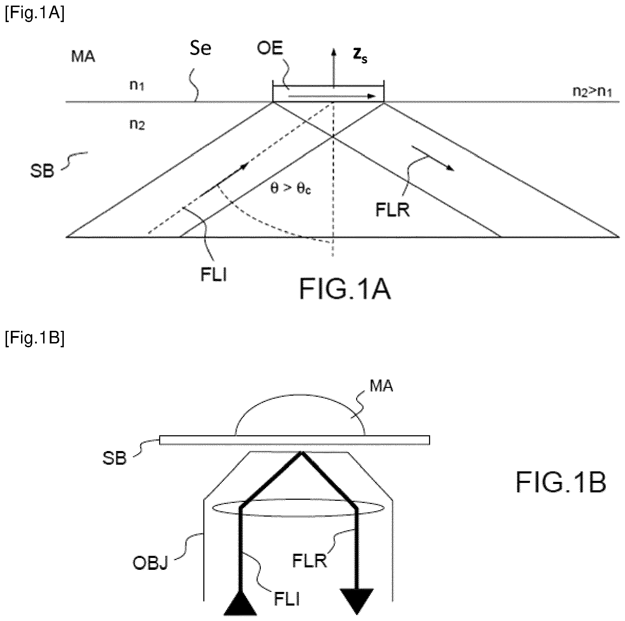

Le principe à la base de la microscopie de fluorescence à onde évanescente est illustré sur la figure 1A. On considère le cas d'un substrat SB d'indice de réfraction $n_2$, présentant une surface Se en contact avec un milieu ambiant MA d'indice $n_1 < n_2$. Par exemple, le substrat SB peut être constitué par une lamelle porte-échantillon, ou par un élément en verre sur lequel est posée une telle lamelle, tandis que le milieu ambiant MA peut être une solution aqueuse contenant, en suspension, des cellules marquées par des fluorophores. Un faisceau lumineux FLI, provenant du substrat SB, est incident sur la surface Se ; sa direction de propagation forme avec la normale $\mathbf{z_s}$ à la surface un angle $\theta$ supérieur à une valeur critique $\theta_c$ (angle limite)

$$\theta_c = arcsin\frac{n_1}{n_2} \qquad (1).$$

Par conséquent le faisceau FLI subit une réflexion totale interne (la référence FLR désigne le faisceau réfléchi) et une onde évanescente OE apparaît dans le milieu ambiant MA. Cette onde évanescente présente une intensité qui décroît exponentiellement avec la distance z de la surface S :

$$I(z) = I_0 e^{-z/\delta}$$

, où la longueur de pénétration $\delta$ est donnée par

$$\delta = \frac{\lambda}{\sqrt{4\pi(n_2^2 sin^2\theta_d - n_1^2)}}$$

(1 bis), $\lambda$ étant la longueur d'onde du rayonnement lumineux. L'onde évanescente excite les fluorophores contenus dans le milieu ambiant, mais seulement sur une épaisseur de l'ordre de $\delta$, car au-delà son intensité devient rapidement négligeable. A titre d'exemple, pour $\lambda$=488 nm, $n_2$=1,514 (verre BK7), $n_1$=1,33 (eau) et $\theta$=67°>$\theta_c \cong$61,45°, on trouve $\delta \cong$93 nm, ce qui signifie que seuls les fluorophores situés dans une couche d'environ 100 nm d'épaisseur sont excités et contribuent à la réalisation d'une image de fluorescence.

La figure 1B illustre la configuration la plus communément utilisée en microscopie TIRF.

Dans le cas de la figure 1B, un même objectif de microscope OBJ, situé du côté du substrat opposé au milieu MA, est utilisé à la fois pour générer les ondes évanescentes par réflexion totale interne et pour collecter le rayonnement de fluorescence. L'objectif est généralement du type à immersion dans l'huile et peut présenter une ouverture numérique (O.N.) importante, par exemple de l'ordre de 1,45, ce qui permet à son tour d'obtenir une résolution spatiale latérale (perpendiculairement à la direction z) élevée car la résolution spatiale latérale est donnée par d=$\lambda$/2O.N. De plus, un objectif OBJ avec une ouverture numérique O.N. élevée est primordial car il permet de déplacer le faisceau lumineux incident FLI par rapport à l'axe optique et ainsi obtenir une forte déviation du faisceau incident FLI par l'objectif, le faisceau FLI pouvant ainsi se propager avec un angle d'incidence $\theta$ élevé et suffisant pour obtenir une réflexion totale interne.

WO 2014/003529 A2 concerne un design d'un capteur à haute performance à base de modes optiques guidés dans une micro puce à structure périodique de milieux diélectriques.

WO 2010/032157 A1 concerne un détecteur à grille caractérisé par une hauteur de volume de détection réglable en continu.

BERNARDO S MENDOZA ET AL: "Tailored Optical Polarization in Nano-Structured Metamaterials", CORNELL UNIVERSITY LIBRARY, CORNELL UNIVERSITY ITHACA, NY 14853, 4 avril 2016.

Cependant, un tel objectif présente un coût très élevé et introduit des aberrations significatives. De plus, l'alignement d'un tel montage est complexe.

L'invention vise à surmonter les inconvénients précités de l'art antérieur. Plus particulièrement, elle vise à procurer un élément optique diffractif comprenant une métasurface permettant par exemple de réaliser de la microscopie TIRF et de s'affranchir de l'utilisation des objectifs à ouverture numérique élevée de l'art antérieur

## Résumé de l'invention :

A cet effet, un objet de l'invention est un élément optique diffractif selon la revendication 1 comprenant :

- un substrat présentant une première surface et une seconde surface opposée à la première surface, transparent à la lumière dans au moins une plage spectrale et présentant, dans ladite plage spectrale, un indice de réfraction supérieur à celui de l'eau ;
- au moins une métasurface en un matériau diélectrique et disposée sur ladite première surface du substrat, la métasurface étant formée de la répétition d'un motif périodique selon deux directions $x$ et $y$ perpendiculaires entre elles et parallèles à une surface du substrat, ledit motif comprenant un sous-motif comprenant une première portion de bande rectiligne selon $y$;

la métasurface présentant une première bande (M1) de pointillés (P) selon la direction $y$, formée à partir dudit sous-motif ;
ledit motif périodique comprenant en outre une deuxième portion de bande rectiligne selon la direction $y$, de sorte que la métasurface présente une seconde bande continue (M2) selon une direction $y$.
la métasurface présentant une première bande (M1) de pointillés (P) selon la direction $y$, formée à partir dudit sous-motif ;ledit motif périodique comprenant en outre une deuxième portion de bande rectiligne selon la direction $y$, de sorte que la métasurface présente une seconde bande continue (M2) selon une direction $y$;
ladite métasurface étant adaptée pour diffracter un rayonnement lumineux de longueur d'onde $\lambda$ comprise dans ladite plage spectrale, incident avec un angle d'incidence, selon un rayonnement diffracté, de manière à ce que le rayonnement diffracté se propage dans le substrat et atteigne ladite seconde surface du substrat selon un angle diffracté $\theta_d$ supérieur ou égal à un angle limite $\theta_c$ de réflexion totale interne entre ledit substrat et de l'eau,
la métasurface étant configurée pour présenter, pour ledit angle d'incidence, une transmission de l'ordre de diffraction 0 inférieure à 5% et une transmission du rayonnement diffracté correspondant à un ordre de diffraction -1 ou +1 supérieure à 50%.

Selon des modes particuliers de l'invention :

- au sein du motif, l'aire de la première bande est inférieure à l'aire de la seconde bande et dans lequel une largeur de la première bande est comprise entre 30nm et 500nm, une largeur de la deuxième bande est comprise entre 100nm et 700nm et une longueur du pointillé est comprise entre 60nm et 800nm ;

- le sous-motif comprend un disque, ledit disque étant disposé entre deux pointillés successifs de ladite première bande ;

- la dimension du motif selon la direction $x$ est telle que $P_x < \lambda/n_{eau}$, avec $n_{eau}$ l'indice de réfraction de l'eau ;

- la dimension totale de la métasurface selon la direction $x$, $x_{MS}$ est telle que $x_{MS} < 2. e. \sin\theta_d$, avec $e$ une épaisseur du substrat ;

- la dimension du motif selon la direction $y$ est comprise entre 300nm et 1000nm ;

- l'indice de réfraction du matériau de la métasurface est supérieur à l'indice de réfraction d'un matériau du substrat ;

- l'élément optique diffractif comprend une pluralité de métasurfaces disposées sur ladite première surface du substrat, avec une dimension du motif selon ladite direction $x$ différente pour chaque métasurface, de manière à ce que chaque métasurface soit adaptée pour diffracter un rayonnement lumineux de longueur d'onde comprise dans ladite plage et différente de celle des autres métasurfaces.

Un autre objet de l'invention est un dispositif d'imagerie d'un échantillon par microscopie de fluorescence par réflexion totale interne comprenant un élément optique comprenant:

- au moins une source de lumière adaptée pour émettre ledit rayonnement lumineux dans ladite plage spectrale, incident sur ledit élément optique diffractif avec ledit angle d'incidence,
ledit rayonnement lumineux diffracté par ledit élément optique diffractif produisant des ondes évanescentes en au moins une région de la seconde surface du substrat ;

- un échantillon placé en correspondance d'au moins une région de la seconde surface où sont produites lesdites ondes évanescentes et générant un rayonnement de fluorescence excité par lesdites ondes évanescentes ;

- un détecteur adapté pour détecter ledit rayonnement de fluorescence émis par ledit échantillon.

Encore un autre objet de l'invention est un dispositif de détection d'un échantillon biologique par résonance de plasmons de surface comprenant un élément optique diffractif ledit élément optique diffractif comprenant :

- une pluralité de métasurfaces avec une dimension du motif selon ladite direction $x$ différente pour chaque métasurface, de manière à ce que le rayonnement diffracté atteigne ladite seconde surface du substrat selon un angle diffracté $\theta_d$ différent pour chaque métasurface,
ledit dispositif comprenant en outre ;

- au moins une source de lumière adaptée pour émettre ledit rayonnement lumineux dans ladite plage spectrale, incident sur ledit élément optique diffractif avec ledit angle d'incidence ;

- un échantillon comprenant au moins un second substrat, une couche métallique disposée au dessus du second substrat et une couche à analyser disposée au dessus de la couche métallique, ledit échantillon étant disposée au dessus du premier substrat de manière à ce que ledit rayonnement diffracté soit réfléchi au moins partiellement par la couche métallique de l'échantillon ;
ledit élément optique diffractif comprenant en outre un élément de couplage optique adaptée pour coupler ledit rayonnement lumineux réfléchi par l'échantillon vers l'espace libre;

- un détecteur adapté pour détecter l'intensité dudit rayonnement lumineux réfléchis par l'échantillon et couplé vers l'espace libre par ledit élément de couplage;
au moins une métasurface étant adaptée pour que ledit angle diffracté associé à la métasurface produise, lors de la réfléxion sur la surface métallique, une excitation résonante de plasmons de surface et une absorption au moins partielle dudit rayonnement diffracté.

Selon un mode particulier de l'invention le élément de couplage optique comprend au moins une métasurface de sortie, formée de la répétition d'un motif périodique selon deux directions x et y perpendiculaires entre elles et parallèles à une surface du substrat ledit motif comprenant un sous-motif comprenant une première portion de bande rectiligne selon y, ladite métasurface de sortie disposée étant sur ladite première surface du substrat.

**Brève description des figures :**

D'autres caractéristiques, détails et avantages de l'invention ressortiront à la lecture de la description faite en référence aux dessins annexés donnés à titre d'exemple et qui représentent, respectivement :

[Fig.1A] et [Fig.1B] la technique de microscopie à onde évanescente connue de l'art antérieur ;

[Fig.2], une vue schématique d'un élément optique diffractif selon l'invention ;

[Fig.3A] et [Fig.3B], respectivement une vue schématique et un graphique présentant une efficacité de diffraction d'un élément optique diffractif selon un premier mode de réalisation de l'invention ;

[Fig.4A] et [Fig.4B], respectivement une vue schématique et un graphique présentant une efficacité de diffraction d'un élément optique diffractif selon une variante du premier mode de réalisation de l'invention ;

[Fig.5], une vue schématique d'un dispositif d'imagerie d'un échantillon par microscopie de fluorescence par réflexion totale interne comprenant un élément optique diffractif selon l'invention;

[Fig.6], une vue schématique d'un dispositif de détection d'un échantillon biologique par résonance de plasmons de surface comprenant un élément optique diffractif selon l'invention ;

Dans les figures, sauf contre-indication, les éléments ne sont pas à l'échelle.

**Description détaillée :**

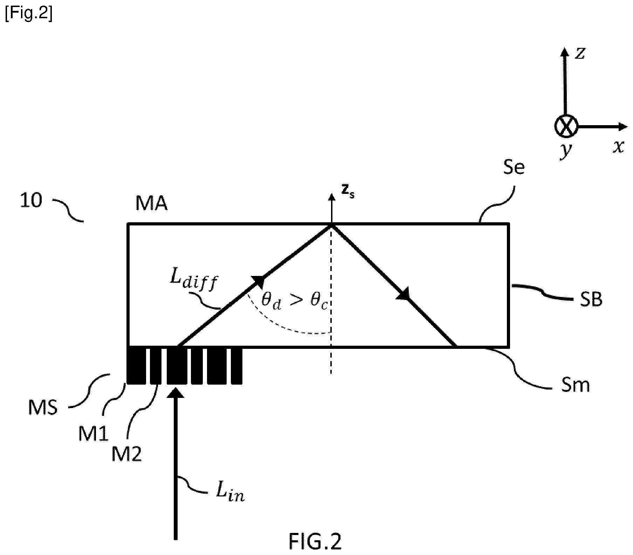

La figure 2 représente une vue schématique d'un élément optique diffractif selon l'invention. Cet élément optique diffractif 10 comprend un substrat SB d'indice $n_2$, présentant une première surface Sm et une seconde surface opposée à la première surface Se, transparent à la lumière dans au moins une plage spectrale et présentant, dans ladite plage spectrale, $n_2$ étant supérieur à celui de l'eau. La surface Se du substrat est en contact avec un milieu ambiant MA d'indice $n_1 < n_2$.

De plus, l'élément optique diffractif de l'invention comprend au moins une métasurface MS en un matériau diélectrique, disposée sur la première surface du substrat Sm. Selon un mode préférentiel de l'invention cette métasurface est en dioxyde de titane. Alternativement, selon un autre mode de réalisation de l'invention, cette métasurface est en silicium.

Selon l'invention, la métasurface est adaptée pour diffracter un rayonnement lumineux $L_{in}$ de longueur d'ondre $\lambda$ comprise dans ladite plage spectrale, incident avec un angle d'incidence $\theta_i$, selon un rayonnement diffracté $L_{diff}$, de manière à ce que le rayonnement diffracté se propage dans le sustrat et atteigne ladite seconde surface du substrat Se selon un angle diffracté $\theta_d$ supérieur ou égal à un angle limite $\theta_c$ de réflexion totale interne entre ledit substrat et de l'eau. A titre d'exemple non limitatif, la longueur d'ondre $\lambda$ du rayonnement lumineux $L_{in}$ est comprise entre 400nm-800nm.

De plus, la structure de la métasurface est configurée pour que la métasurface présente, pour ledit angle d'incidence $\theta_i$, une transmission de l'ordre de diffraction 0 inférieure à 5% et une transmission du rayonnement diffracté $L_{diff}$ correspondant à un ordre de diffraction -1 ou +1 supérieure à 50%.

Dans la suite, dans toutes les figures on considère que le rayonnement diffracté $L_{diff}$ représente l'ordre de diffraction vers lequel le rayonnement incident est majoritairement diffracté (ou redirigé).

Dans la suite on appelera « angle de diffraction » ou « angle diffracté », l'angle $\theta_d$ que forme le rayonnement diffracté $L_{diff}$ avec la normale $z_s$ à la seconde surface du substrat. Selon un mode préférentiel de l'invention, les deux surfaces opposées Se et Sm du substrat sont parallèles et l'angle de diffraction est égal à celui formé par une normale de la première surface Sm et le rayonnement diffracté. Dans la suite de l'exposé de l'invention, et cela à titre non limitatif, les deux surfaces $S_e$ et $S_m$ du substrat sont parallèles.

Selon un mode de réalisation de l'invention, le substrat est en verre optique transparent sur la game spectrale 400nm-800nm comme des verres borosilicatés ou du BK-7. Dans ce mode de réalisation, comme mentionné précédemment, l'angle limite $\theta_c$ vaut $\theta_c \approx 61°$, aussi l'angle de diffraction $\theta_d$ est supérieur à 61°.

Alternativement, selon un autre mode de réalisation, le substrat est en quartz, ou en silice fondue.

L'élément optique diffractif 10 de l'invention permet une très faible transmission de l'ordre de diffraction 0 et permet de rediriger une intensité du rayonnement incident majoritairement vers un ordre de diffraction -1 par rapport à l'ordre +1 (ou l'inverse) tel un réseau d'échelette, avec un angle $\theta_d$ suffisamment élevé afin de permettre une réflexion totale interne (TIR en anglais) du rayonnement diffracté lorsque le milieu ambiant MA (audessus du substrat) est aqueux. La réflexion totale interne du rayonnement diffracté au sein du substrat permet l'excitation d'ondes évanescentes dans le milieu ambiant MA au-dessus de la région où le rayonnement diffracté subit une réflexion totale interne.

Aussi, l'élément optique de l'invention est particulièrement adapté à des applications de microscopie TIRF qui nécessitent l'excitation d'ondes évanescente à l'interface entre un substrat (typiquement une lame de verre) et un échantillon conservé dans un milieu aqueux. En effet, en microscopie TIRF, il est désirable d'avoir une transmission de l'ordre de diffraction 0 la plus faible possible afin de réduire le bruit de fond provenant du rayonnement d'épifluorescence émis par un échantillon contenant des fluorophores lors de la transmission du rayonnement incident.

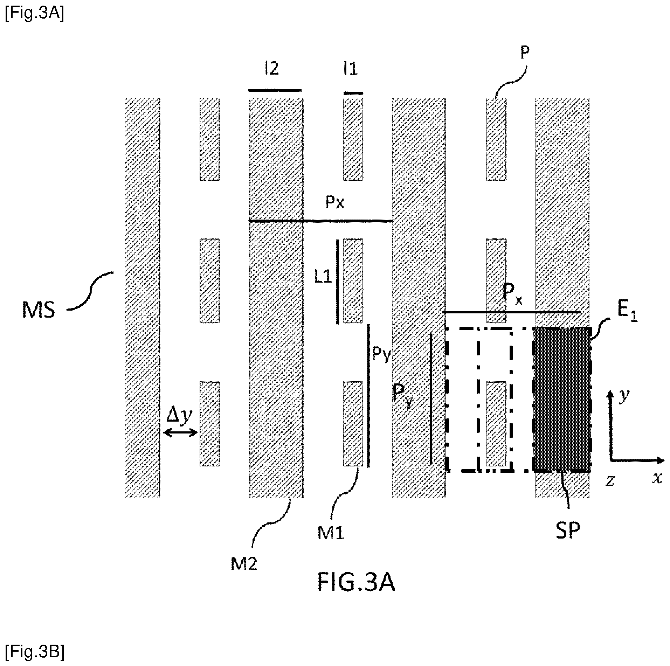

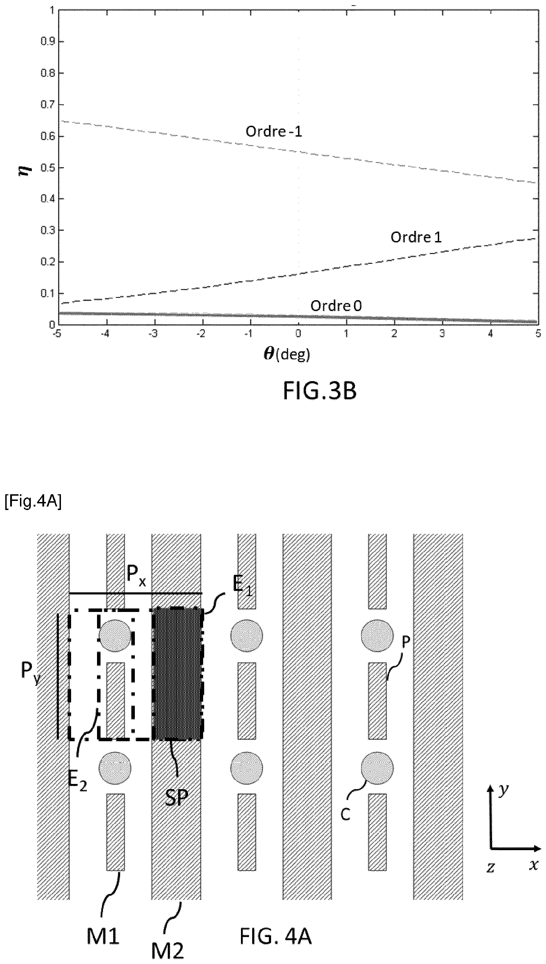

Pour réaliser les effets précités, à l'aide de simulations numériques, les inventeurs ont mis au point un type de métasurface particulier qui est décliné en un premier mode de réalisation de l'invention, détaillé dans la figure 3A et une variante du premier mode de réalisation, illustré en figure 4A. Dans tous les modes de réalisation de l'invention, la métasurface est formée d'un motif périodique selon deux directions x et y perpendiculaires entre elles et parallèles à une surface du substrat, la dimension du motif Px étant inférieure à la longueur d'onde du rayonnement incident $\lambda$. Le motif comprend un sous-

motif $E_2$ comprenant une première portion P de bande rectiligne selon y.

Les métasurfaces de l'invention sont produites sur le substrat par des méthodes connues de l'homme de l'art. A titre d'exemple donné à titre non limitatif, elles peuvent être produites par lithographie à faisceau d'électron ou par lithographie par nanoimpression puis structurées par gravure plasma afin de former les motifs et si nécessaire, les sous-motifs. Ces méthodes sont rapides, répétables et relativement peu coûteuses.

De manière connue, la dimension du motif $P_x$ selon la direction x est reliée à l'ordre de diffraction m, à la longueur d'onde du rayonnement incident $\lambda$ et à l'angle de diffraction $\theta_d$ par l'équation suivante :

$$P_x = \frac{m\lambda}{n_2 \sin(\theta_d)} \qquad (2).$$

Ici, la dimension du motif $P_x$ selon la direction x peut être entendue comme la période de répétition du motif de la métasurface.

En se basant sur l'équation (2) et l'équation (1), dans tous les modes de réalisation de l'invention, la dimension $P_x$ du motif selon la direction x, est telle que :

$$P_x < \lambda/n_1.$$

Ainsi, l'angle de diffraction du faisceau diffracté sera supérieur à l'angle critique à l'interface entre la surface Se du substrat et le milieu ambiant MA d'indice $n_1$. Lorsque le milieu ambiant MA est de l'eau, la dimension $P_x$ du motif selon la direction x, est telle que $P_x < \lambda/1.33$.

Comme le montre l'équation (2), plus la dimension du motif selon la direction x est faible, plus l'angle de diffraction est important. De plus, comme le montre l'équation (1bis), plus l'angle de diffraction est important, plus la longueur de pénétration des ondes evanescente est faible. Ainsi, pour application à la microscopie TIRF, plus la dimension du motif de la métasurface est faible, plus l'excitation des fluorophores d'un échantillon sera localisée sur une couche mince améliorant ainsi la résolution axiale du dispositif.

Afin de maximiser l'efficacité de l'ordre de diffraction -1 ou +1 et afin de limiter la tranmission de l'ordre 0, dans tous les modes de réalisation, l'indice de réfraction du matériau de la métasurface $n_{mat}$ est supérieur à l'indice de réfraction du matériau du substrat $n_2$. Cette condition provient de la relation entre l'efficacité de diffraction des différents ordres de diffraction et le couplage entre les modes de Blochs excités dans la métasurface selon la direction z par un rayonnement incident $L_{in}$. Les modes de Bloch propagatifs excités possèdent des coefficients de couplage pour la transmission des ordres de diffraction 0, +1 et -1 avec sensiblement la même amplitude mais des profils de phase différent et sont ainsi additionés de manière constructive pour l'ordre de diffraction -1 ou +1 et de manière destructive pour l'ordre 0. Ainsi, avec la métasurface selon l'invention, le rayonnement incident est majoritairement dirigé vers l'ordre de diffraction +1 ou -1.

La figure 3A illustre une vue schématique d'un élément optique diffractif 10 selon un premier mode de réalisation de l'invention. Ce premier mode de réalisation, présente une première bande M1 de pointillés P, soit une bande non continue, selon la direction y, formée à partir dudit sous-motif E2. Le pointillé P correspond à la première portion de bande rectiligne qui se répète selon l'axe y. De plus, le motif périodique E1 comprend en outre une deuxième portion de bande rectiligne, dite seconde portion SP, selon la direction y s'étendant sur toute la dimension selon y du motif E1, de sorte que la métasurface présente une seconde bande continue M2 selon une direction y.

Dans ce mode de réalisation, la métasurface comprend donc un réseau selon x de bandes continues rectilignes M2 selon y avec, entre chaque bande continue, une bande en pointillé M1 également selon y.

Afin de générer une rampe d'indice effectif au sein d'un motif de la métasurface suffisante pour se placer en régime des milieux effectifs, et ainsi dévier ou diffracter le rayonnement incident, il est nécessaire que, au sein d'un motif E1, l'aire de la première bande (donc d'un pointillé P), soit inférieure à l'aire de la seconde portion SP. Ces aires sont déterminées par simulations numériques de manière à générer une variation suffisante d'indice effectif entre la région constituée par les pointillés et la région formée par la bande continue M1.

De même, l'espacement entre les pointillés P influe sur l'indice effectif de la région formée par les pointillés et est déterminée par simulation numérique.

La position relative de la première bande pointillée M1 par rapport à la seconde bande continue M2, $\Delta y$, a pour effet de générer une rupture de symétrie selon la direction x, ce qui permet à la métasurface de rédiriger l'intensité du rayonnement incident principalement vers un ordre de difffraction plutôt qu'un autre. Cette position relative de la première bande par rapport à la seconde bande dépend des dimensions de tous les éléments de la métasurface et est optimisée par simulation numérique RCWA (rigourous coupled wave analysis).

A titre d'exemple donné de manière non limitatif, dans ce pemier mode de réalisation, la largeur de la première bande I1 est comprise entre 30nm et 500nm, une largeur de la deuxième bande I2 est comprise entre 100nm et 700nm et une longueur du pointillé P est comprise entre 60nm et 800nm. La dimension $P_x$ du motif selon la direction x est comprise entre 300 et 1000nm et la dimension $P_y$ selon la direction y du sous-motif est comprise entre 300 et 1000nm. La profondeur des bandes (dimension de la métasurface selon la direction z) est comprise entre 100 et 500 nm. Typiquement, la longueur d'onde $\lambda$ est comprise entre 400nm et 800nm.

La figure 3B illustre l'efficacité de diffraction de l'élément optique diffractif selon le premier mode de réalisation de l'invention, pour une gamme d'angle d'incidence comprise entre -5° et 5°. Dans cet exemple donné à titre non limitatif, la largeur de la première bande vaut 160nm , une largeur de la deuxième bande vaut 61 nm et une longueur du pointillé vaut 322nm. La position relative de la première bande par rapport à la seconde bande vaut 186nm. La dimension Px du motif selon la direction x vaut 465nm et la dimension Py du sous-motif selon la direction y vaut 465nm. Ces transmissions sont obtenues pour 640nm.

L'efficacité de l'ordre de diffraction -1 est supérieure à celle de l'ordre de diffraction +1 et très nettement supérieure à celle de l'ordre de diffraction 0. Pour un angle d'incidence de 0°, l'efficacité de l'ordre de diffraction -1 vaut 55%, celle de l'ordre +1 vaut 15% et celle de l'ordre de diffraction 0 vaut environ 3%. Dans cet exemple, l'angle de diffraction $\theta_d$ vaut 65°.

La structure de la métasurface de la figure 3A permet donc de rediriger le rayonnement incident majoritairement vers l'ordre de diffraction -1 tout en ayant une transmission de l'ordre 0 très faible.

La figure 4A illustre une vue schématique d'un élément optique diffractif selon une variante du premier mode de réalisation de l'invention. Dans cette variante, chaque sous-motif E2 de la metasurface de l'élément optique diffractif comprend un disque C disposé entre deux pointillés P successifs de la première bande M1. La première bande M1 est donc formée par une alternance de pointillés et de disques C selon la direction y.

Dans cette variante du premier mode de réalisation, le diamètre du disque C et sa position relative au pointillé P selon la direction y dans un sous motif E2 sont optimisés par simulation RCWA de manière à générer un indice effectif adapté dans le sous motif E2 par rapport à l'indice effectif du motif E1,

A titre d'exemple donné de manière non limitatif, dans cette variante du premier mode de réalisation, le diamètre des disques est compris entre 30 et 500 nm et son espacement selon la direction y avec le pointillé du sous-motif est compris entre 20 et 100 nm.

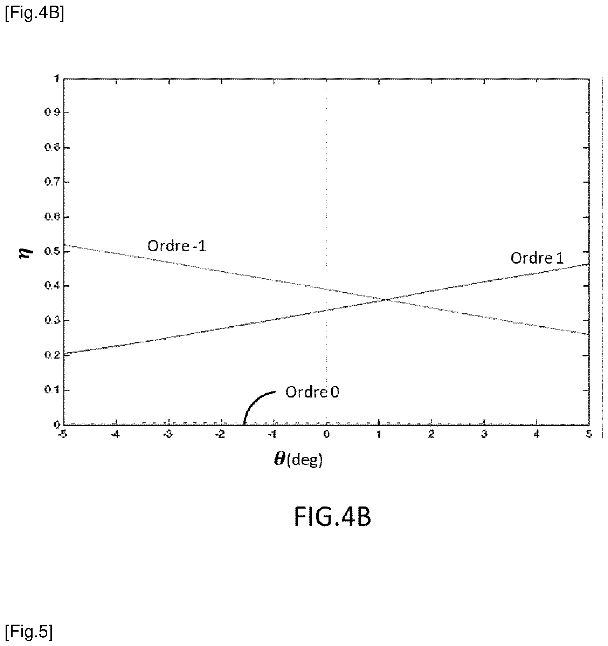

La figure 4B illustre l'efficacité de diffraction de l'élément optique diffractif selon la variante du premier mode de réalisation de l'invention, pour une gamme d'angle d'incidence comprise entre -5° et 5°. Dans cet exemple donné à titre non limitatif, la largeur de la première bande M1 vaut 170nm, une largeur de la deuxième bande M2 vaut 31nm et une longueur du pointillé P vaut 246nm. La position relative de la première bande M1 par rapport à la seconde bande M2 vaut 123nm. Le diamètre des disques vaut 112nm nm et son espacement selon la direction y avec le pointillé du sous-motif vaut 53nm nm. La dimension Px du motif selon la direction x vaut 465nm et la dimension Py selon la direction y du sous-motif vaut 465nm. Ces transmissions sont obtenues pour 640nm.

Dans cette variante, la métasurface comprend donc un réseau selon x de bandes continues rectilignes M2 selon y avec, entre chaque bande continue, une bande en pointillé M1 également selon y, la bande pointillé comprenant des disques C entre chaque pointillé.

L'efficacité des ordres de diffraction -1 et +1 est très nettement supérieure à celle de l'ordre de diffraction 0. Ainsi, pour un angle d'incidence de -5°, l'efficacité de l'ordre de diffraction -1 vaut 51%, celle de l'ordre +1 vaut 20% et celle de l'ordre de diffraction 0 est inférieure à 1%. L'efficacité de l'ordre de diffractions +1 est comparable à celle de l'ordre de diffraction -1. Dans cet exemple, l'angle de diffraction $\theta_d$ vaut 65°.

La structure de la métasurface de la figure 4A permet donc de rediriger le rayonnement incident majoritairement vers l'ordre de diffraction -1 tout en ayant une transmission de l'ordre 0 extrêmement faible.

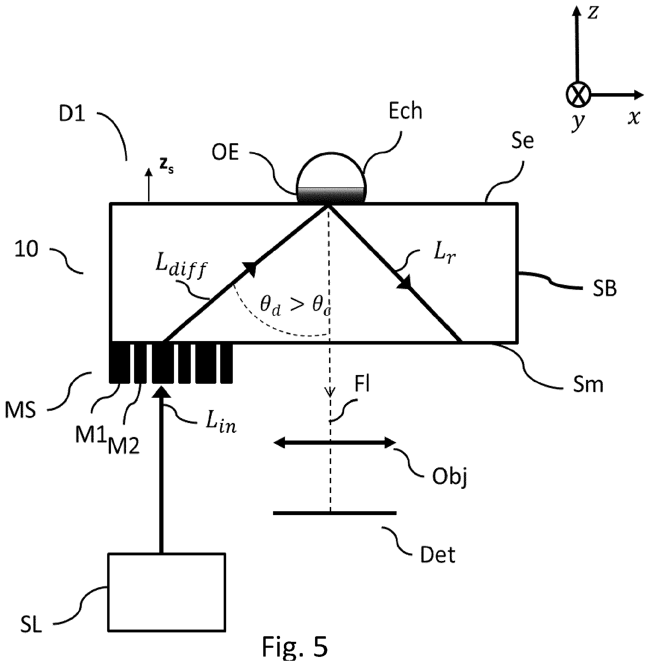

Un autre objet de l'invention est un dispositif d'imagerie D1 d'un échantillon par microscopie de fluorescence par réflexion totale interne comprenant un élément optique diffractif 10 tel que décrit précédemment. Une vue schématique du dispositif D1 est illustrée par la figure 5.

Le dispositif D1 comprend au moins une source de lumière SL pour émettre un rayonnement lumineux $L_{in}$ dans la plage spectrale dans lequel le substrat est transparent. L'élément optique diffractif est adapté pour qu'un rayonnement lumineux émis par la source de lumière SL à la longueur d'onde $\lambda$, soit incident sur la métasurface MS avec l'angle d'incidence $\theta_i$ de manière à ce que le rayonnement lumineux diffracté $L_{diff}$ par ledit élément optique diffractif soit réfléchi en réflexion totale interne par la seconde face du substrat et produise des ondes évanescentes OE en au moins une région de la seconde surface Se du substrat.

Le dispositif D1 comprend en outre un échantillon Ech placé en correspondance d'au moins une région de la seconde surface où sont produites lesdites ondes évanescentes et générant un rayonnement de fluorescence Fl excité par lesdites ondes évanescentes.

Dans un mode de réalisation, l'échantillon Ech est un échantillon de culture cellulaire, les cellules étant cultivées sur une lame dans un matériau identique à celui du substrat SB et conservées en milieu aqueux. L'angle de diffraction $\theta_d$ du rayonnement diffracté $L_{diff}$ étant supérieur à l'angle critique de réflexion totale interne entre ledit substrat et de l'eau, la réflexion totale interne du rayonnement diffracté à l'interface entre la seconde surface Se et le milieu aqueux génère des ondes évanscentes OE. Ces ondes vont exciter des fluorophores de l'échantillon situés dans une couche de faible épaisseur (environ 100 nm) qui contribuent à la réalisation d'une image de fluorescence

Le dispositif D1 comprend de plus un objectif Obj adapté pour collecter le rayonnement de fluorescence Fl et pour le diriger vers un détecteur Det adapté pour détecter ledit rayonnement de fluorescence émis par l'échantillon.

L'angle de la propagation du rayonnement diffracté restant constant au sein du substrat, le rayonnement diffracté se propage sur toute la longueur du substrat et génère des ondes évanescentes en chaque région de réflexion sur une surface du substrat. Cela signifie que lorsque la dimension selon la direction x du substrat le permet, il existe une pluralité de régions de réflexion sur une surface du substrat où sont produites des ondes évanescentes et donc une pluralité de régions où un rayonnement de fluorescence au sein d'un échantillon peut être excité.

La dimension transverse (selon la direction x et y) des régions où sont produites les ondes évanescentes est fixée par la plus petite des dimensions entre la dimension transverse de la métasurface MS et le diamètre du faisceau du rayonnement incident $L_{in}$.

La dimension latérale totale selon la direction x de la métasurface MS est fixée par l'angle de diffraction $\theta_d$ et l'épaisseur e du substrat. En effet, le rayonnement diffracté et réfléchi par la seconde surface Se du substrat (qu'on appelle rayonnement réfléchi $L_r$) ne doit pas être extrait du substrat par la métasurface MS. La dimension latérale de la métasurface selon la direction x, $x_{MS}$ est donc telle que $x_{MS} < 2e\sin\theta_d$.

Le dispositif D1 permet de réaliser de la microscopie de fluorescence par réflexion totale interne (microscopie TIRF) d'un échantillon Ech en utilisant un élément optique diffractif 10 selon l'invention. Cet élément optique diffractif 10 permet de générer une déviation suffisante du rayonnement incident pour qu'il se propage dans le substrat de l'élément optique diffractif selon une direction adaptée pour générer des ondes évanescentes à l'interface entre le substrat de l'élément optique diffractif et l'échantillon.

Ainsi, le dispositif D1 permet d'observer de manière sélective des structures et processus localisés sur une membrane cellulaire, avec une résolution spatiale dans une direction axiale bien meilleure que la limite de diffraction.

De plus, le dispositif D1 permet de réaliser de la microscopie TIRF sans utiliser un objectif à forte ouverture numérique ON, réduisant fortement le coût du dispositif D1 par rapport à un dispositif de microscopie TIRF de l'art antérieur.

En outre, la transmission de l'ordre de diffraction 0 de l'élément optique diffractif du dispositif de D1 étant très faible, l'intensité du rayonnement d'épifluorescence émis par l'échantillon lors de la transmission directe du rayonnement incident est fortement réduite. Le bruit de fond produit par ce rayonnement est diminué et le contraste de l'image de fluorescence de la couche de faible épaisseur de l'échantillon est amélioré.

Selon un mode de réalisation de l'invention, le trajet du rayonnement lumineux incident entre la source de lumière SL et l'élément optique diffractif est effectué dans l'espace libre. Cet arrangement expérimental est simple et permet de contrôler facilement la région d'excitation de l'échantillon. Dans ce mode de réalisation la source de lumière peut être une source laser ou une source LED placée à proximité immédiate de la métasurface MS. Lorsque la source de lumière est une source LED placée à proximité immédiate de la métasurface MS, il est avantageux de placer l'échantillon Ech au-dessus d'une région de la seconde surface Se du substrat où sont produites des ondes évanescentes, qui est éloignée transversalement selon la direction x de la métasurface MS. En d'autres termes, il est avantageux de placer l'échantillon au-dessus d'une région correspondant à une pluralité de réflexions sur les surfaces du substrat. En effet, l'intensité du rayonnement parasite émise par la LED, diffusé par la métasurface et illuminant l'échantillon, sera fortement réduit. Ainsi, le bruit de fond produit par ce rayonnement parasite est diminué et le contraste est amélioré.

Alternativement, selon un autre mode de réalisation, le trajet du rayonnement lumineux incident entre la source de lumière SL et l'élément optique diffractif est fibré et le dispositif D1 comprend un coupleur à fibre optique (non représenté dans la figure 5) permettant de diriger le rayonnement lumineux $L_{in}$ vers la métasurface MS de l'élément optique diffractif. L'avantage de ce mode de réalisation est qu'il ne nécessite pas d'alignement ultérieur après le placement approprié du coupleur à fibre optique. Dans ce mode de réalisation, la source de lumière SL est une source laser.

Alternativement, selon un autre mode de réalisation l'objectif Obj est en outre adapté pour collimater le rayonnement incident $L_{in}$ sur la metasurface MS. Dans ce mode de réalisation, le dispositif comprend une autre lentille (non représentée) focalisant le rayonnement incident $L_{in}$ émis par la source de lumière SL sur le plan focal objet de l'objectif Obj, l'image du rayonnement étant alors rejetée à l'infini dans le plan image de l'objectif Obj. Dans ce mode de réalisation, l'angle d'incidence $\theta_i$ du rayonnement incident est adapté pour que le rayonnement réfléchi $L_r$ ne soit pas collecté par l'objectif.

Selon un mode de réalisation de l'invention, l'élément optique diffractif comprend une pluralité de métasurfaces $MS_1$, $MS_2$, $MS_n$, disposées sur ladite première surface du substrat Sm, avec une dimension Px du motif selon ladite direction x différente pour chaque métasurface. Ainsi, chaque métasurface est adaptée pour diffracter un rayonnement lumineux $L_{in}$ de longueur d'onde différente de celle des autres métasurfaces. Dans ce mode de réalisation de l'invention, le dispositif d'imagerie D1 de la figure 5 possède l'avantage d'être accordable en longueur d'onde.

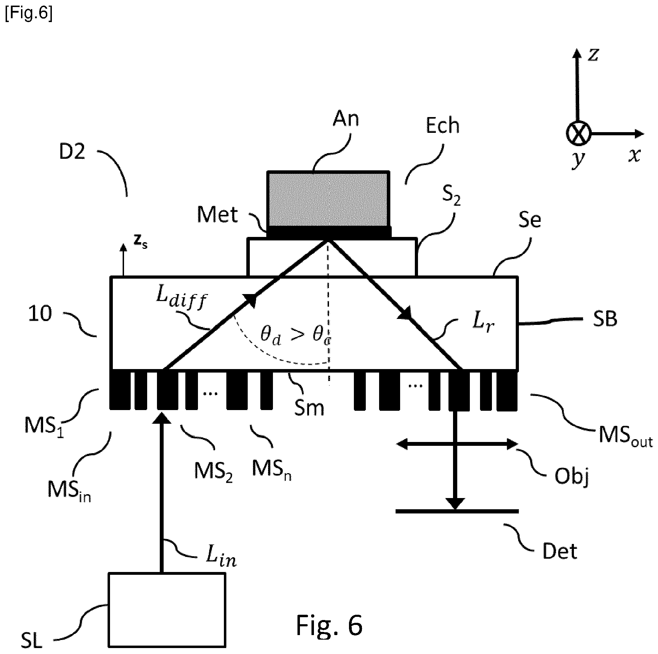

Un autre objet de l'invention est un dispositif de détection d'un échantillon biologique par résonance de plasmons de surface D2 comprenant un élément optique diffractif selon l'invention. Une vue schématique du dispositif D2 est illustrée par la figure 6.

L'élément optique diffractif du dispositif de la figure 6 comprend une pluralité de n métasurfaces $MS_1$, $MS_i$, ..., $MS_n$, avec une dimension dudit motif Px selon ladite direction x différente pour chaque métasurface, de manière à ce que le rayonnement diffracté $L_{diff}$ atteigne ladite seconde surface du substrat Se selon un angle $\theta_{d,i}$ associé à la i-ème métasurface $MS_i$.

Le dispositif D2 de la figue 6 comprend en outre au moins une source de lumière SL adaptée pour émettre le rayonnement lumineux $L_{in}$ dans la plage spectrale dans lequel le substrat est transparent. La source est adaptée pour que le rayonnement lumineux soit incident sur les métasurfaces avec l'angle d'incidence $\theta_i$

Le dispositif D2 de la figure 6 comprend de plus un échantillon Ech comprenant au moins un second substrat $S_2$, une couche métallique Met disposée au dessus du second substrat et une couche à analyser An disposée au dessus de la couche métallique.

Selon un mode de réalisation de l'invention la couche à analyser est une couche aqueuse.

L'échantillon Ech est disposée au dessus du premier substrat SB de manière à ce que ledit rayonnement diffracté soit réfléchi au moins partiellement par la couche métallique de l'échantillon, formant un rayonnement réfléchi $L_r$.

L'élément optique diffractif du dispositif D2 comprend en outre un élément de couplage optique $MS_{out}$ placé sur la première surface du substrat Sm et adaptée pour coupler ledit rayonnement lumineux réfléchi par l'échantillon $L_r$ vers l'espace libre.

Selon un mode de l'invention, l'élément de couplage optique $MS_{out}$ comprend au moins une métasurface de sortie formée de la répétition d'un motif périodique $E_1$ selon deux directions *x* et *y* perpendiculaires entre elles et parallèles à une surface du substrat ledit motif comprenant un sous-motif $E_2$ comprenant une première portion de bande rectiligne selon y P, ladite métasurface de sortie disposée sur ladite première surface du substrat Sm la métasurface.

Selon un mode préférentiel de l'invention, l'élément de couplage optique $MS_{out}$ est le « miroir » de l'élément optique diffractif $MS_{in}$. C'est à dire que l'élément optique $MS_{out}$ est le symétrique axial par un axe parallèle à la direction *z* de l'élément optique diffractif $MS_{in}$.

Le dispositif D2 de la figure 6 comprend un détecteur Det adapté pour détecter l'intensité dudit rayonnement lumineux réfléchi par l'échantillon et couplé vers l'espace libre par ledit élément de couplage.

Selon un mode de réalisation, le dispositif D2 comprend de plus un objectif Obj adapté pour collecter le rayonnement réfléchi $L_r$ couplé vers l'espace libre par ledit élément de couplage, et pour le diriger vers le détecteur Det.

L'élément optique diffractif comprend au moins une métasurface $MS_i$ adaptée pour que l'angle de diffraction $\theta_j$ associé à la métasurface produise, lors de la réfléxion sur la surface métallique, une excitation résonante de plasmons de surface et une absorption au moins partielle dudit rayonnement diffracté $L_{diff}$. Lorsque le rayonnement incident est dévié par une métasurface $MS_i$ avec un angle de diffraction $\theta_{d,i}$ associé, qui permet l'excitation de la résonance de plasmons de surface lors de la réflexion par la couche métallique Met, le rayonnement diffracté est partiellement absorbé et l'intensité du rayonnement réfléchi $L_r$ diminue.

Selon un mode de réalisation, au dessus de la couche métallique Met de l'échanillon est disposée une couche de fonctionalisation chimique adaptée pour permettre l'adsorption de molécules biologiques spécifiques et que l'on souhaite détecter dans la couche a analyser An.

Afin de détecter la présence de molécules, il est donc nécessaire d'illuminer, à l'aide de la source de lumière SL, successivement chaque métasurfaces MS et de détecter à l'aide du détecteur Det l'intensité du rayonnement réfléchi $L_r$. Appelons $\theta_{SPR,0}$ l'angle d'excitation de la résonance de plasmons de surface de la couche Met, sans la présence de molécules à détecter dans a couche à analyser An. La résonance de plasmons de surface est alors excitée par la k-ième métasurface $MS_k$ à qui est associée un angle de diffraction $\theta_{d,k} = \theta_{SPR,0}$. Pour cette unique métasurface $MS_k$, l'intensité du rayonnement réfléchi $L_r$ est diminuée comparativement à l'intensité du rayonnement réfléchi $L_r$ obtenu avec les autres métasurfaces.

Lorsque les molécules à détecter sont présentes au sein de la couche à analyser, ces dernières vont s'adsorber à la couche métallique Met changeant alors l'angle pour lequel la résonance de plasmons de surface est excitée. Appelons alors $\theta_{SPR,1}$ l'angle pour lequel la résonance de plamons de surface est excitée.

La détection de molécules venant s'adsorber à la métasurface est donc effectuée lorsque l'on observe un changement de la métasurface $MS_m$ à qui est associée un angle de diffraction $\theta_{d,m} = \theta_{SPR,1}$ qui permet l'excitation de la résonance de plasmons de surface et pour laquelle l'intensité du rayonnement réfléchi $L_r$ diminue.

Le dispositif D2 de la figure 6 permet d'effectuer de la détection biologique par résonance de plasmons de surface avec un montage nettement simplifié par rapport aux dispositifs de l'art antérieur. Plus précisément, ce dispositif permet la détection par résonance de plasmons de surface sans nécessiter de varier la longueur d'onde ou l'angle d'incidence $\theta_i$ du rayonnement incident $L_{in}$. De plus, ce dispositif est simple à aligner, à l'inverse des dispositifs de l'art antérieur qui utilisent pour la plupart des prismes de couplage afin d'exciter la résonance de plasmons de surface, ces derniers étant volumineux et complexes à aligner.

**Revendications**

1. Elément optique diffractif (10) comprenant :

   - un substrat (SB) présentant une première surface (Sm) et une seconde surface opposée à la première surface (Se), transparent à la lumière dans au moins une plage spectrale et présentant, dans ladite plage spectrale, un indice de réfraction supérieur à celui de l'eau ;
   - au moins une métasurface (MS) en un matériau diélectrique et disposée sur ladite première surface du substrat (Sm), la métasurface étant formée de la répétition d'un motif périodique ($E_1$) selon deux directions x et y perpendiculaires entre elles et parallèles à une surface du substrat, ledit motif comprenant un sous-motif ($E_2$) comprenant une première portion (P) de bande rectiligne selon y;
   la métasurface présentant une première bande (M1) de pointillés (P) selon la direction y, formée à partir dudit sous-motif ;
   ledit motif périodique comprenant en outre une deuxième portion de bande rectiligne selon la direction y, de sorte que la métasurface présente une seconde bande continue (M2) selon une direction y.
   ladite métasurface étant adaptée pour diffracter un rayonnement lumineux ($L_{in}$) de longueur d'onde $\lambda$ comprise dans ladite plage spectrale, incident avec un angle d'incidence, selon un rayonnement diffracté ($L_{diff}$), de manière à ce que le rayonnement diffracté se propage dans le substrat et atteigne ladite seconde surface du substrat (Se) selon un angle diffracté $\theta_d$ supérieur ou égal à un angle limite $\theta_c$ de réflexion totale interne entre ledit substrat et de l'eau,
   ladite métasurface étant configurée pour présenter, pour ledit angle d'incidence, une transmission de l'ordre de diffraction 0 inférieure à 5% et une transmission du rayonnement diffracté ($L_{diff}$) correspondant à un ordre de diffraction -1 ou +1 supérieure à 50%.

2. Elément optique diffractif selon la revendication précédente, dans lequel, au sein du motif, l'aire de la première bande est inférieure à l'aire de la seconde bande et dans lequel une largeur de la première bande (l1) est comprise entre 30nm et 500nm, une largeur de la deuxième bande (l2) est comprise entre 100nm et 700nm et une longueur du pointillé (P) est comprise entre 60nm et 800nm.

3. Elément optique diffractif selon l'une des revendications 1 ou 2, dans lequel le sous-motif comprend un disque (C), ledit disque étant disposé entre deux pointillés (P) successifs de ladite première bande.

4. Elément optique diffractif selon l'une quelconque des revendications précédentes, dans lequel la dimension du motif (Px) selon la direction x est telle que $P_x < \lambda/n_{eau}$, avec $n_{eau}$ un indice de réfraction de l'eau.

5. Elément optique diffractif selon l'une quelconque des revendications précédentes, dans lequel la dimension totale de la métasurface selon la direction x, $x_{MS}$ est telle que $x_{MS} < 2.e.\sin\theta_d$, avec e une épaisseur du substrat.

6. Elément optique diffractif selon l'une quelconque des revendications précédentes, dans lequel la dimension du motif (Py) selon la direction y est comprise entre 300nm et 1000nm.

7. Elément optique diffractif selon l'une quelconque des revendications précédentes, dans lequel l'indice de réfraction du matériau de la métasurface est supérieur à l'indice de réfraction d'un matériau du substrat.

8. Elément optique diffractif selon l'une quelconque des revendications précédentes, comprenant une pluralité de métasurfaces ($MS_1$, $MS_2$, $MS_n$) disposées sur ladite première surface du substrat (Sm), avec une dimension du motif selon ladite direction x (Px) différente pour chaque métasurface, de manière à ce que chaque métasurface soit adaptée pour diffracter un rayonnement lumineux ($L_{in}$) de longueur d'onde comprise dans ladite plage et différente de celle des autres métasurfaces.

9. Dispositif d'imagerie (D1) d'un échantillon par microscopie de fluorescence par réflexion totale interne comprenant un élément optique diffractif (10) selon l'un quelconque des revendications précédentes et comprenant:

    - au moins une source de lumière (SL) adaptée pour émettre ledit rayonnement lumineux ($L_{in}$) dans ladite plage spectrale, incident sur ledit élément optique diffractif avec ledit angle d'incidence,
    ledit rayonnement lumineux diffracté par ledit élément optique diffractif produisant des ondes évanescentes (OE) en au moins une région de la seconde surface (Se) du substrat ;
    - un échantillon (Ech) placé en correspondance d'au moins une région de la seconde surface où sont produites lesdites ondes évanescentes et générant un rayonnement de fluorescence (Fl) excité par lesdites ondes évanescentes ;
    - un détecteur (Det) adapté pour détecter ledit rayonnement de fluorescence (Fl) émis par ledit échantillon..

10. Dispositif de détection (D2) d'un échantillon biologique par résonance de plasmons de surface comprenant un élément optique diffractif (10) selon l'une quelconque des revendications 1 à 8, ledit élément optique diffractif comprenant :

    - une pluralité de métasurfaces ($MS_1$, $MS_2$, $MS_n$,) avec une dimension du motif selon ladite direction x (Px) différente pour chaque métasurface, de manière à ce que le rayonnement diffracté ($L_{diff}$) atteigne ladite seconde surface du substrat (Se) selon un angle diffracté $\theta_d$ différent pour chaque métasurface,

ledit dispositif comprenant en outre ;
    - au moins une source de lumière (SL) adaptée pour émettre ledit rayonnement lumineux ($L_{in}$) dans ladite plage spectrale, incident sur ledit élément optique diffractif avec ledit angle d'incidence ;
    - un échantillon (Ech) comprenant au moins un second substrat ($S_2$), une couche métallique (Met) disposée au dessus du second substrat et une couche à analyser (An) disposée au dessus de la couche métallique, ledit échantillon étant disposée au dessus du premier substrat (SB) de manière à ce que ledit rayonnement diffracté soit réfléchi ($L_r$) au moins partiellement par la couche métallique de l'échantillon ;
    ledit élément optique diffractif comprenant en outre un élément de couplage optique ($MS_{out}$) adaptée pour coupler ledit rayonnement lumineux réfléchi par l'échantillon vers l'espace libre;
    - un détecteur (Det) adapté pour détecter l'intensité dudit rayonnement lumineux réfléchis par l'échantillon et couplé vers l'espace libre par ledit élément de couplage;
    au moins une métasurface étant adaptée pour que ledit angle diffracté associé à la métasurface produise, lors de la réfléxion sur la surface métallique, une excitation résonante de plasmons de surface et une absorption au moins partielle dudit rayonnement diffracté ($L_{diff}$).

11. Dispositif selon la revendication précédente, dans lequel ledit élément de couplage optique comprend au moins une métasurface de sortie, formée de la répétition d'un motif périodique ($E_1$) selon deux directions x et y perpendiculaires entre elles et parallèles à une surface du substrat ledit motif comprenant un sous-motif ($E_2$) comprenant une première portion de bande rectiligne selon y (P), ladite métasurface de sortie disposée étant sur ladite première surface du substrat (Sm).

**Patentansprüche**

1. Beugungsoptisches Element (10), umfassend:

    - ein Substrat (SB) mit einer ersten Oberfläche (Sm) und einer zweiten Oberfläche gegenüber der ersten Oberfläche (Se), das für Licht in mindestens einem Spektralbereich transparent ist und in diesem Spektralbereich einen Brechungsindex aufweist, der höher als der von Wasser ist;
    - mindestens eine Metaoberfläche (MS), die aus einem dielektrischen Material besteht und auf der ersten Oberfläche des Substrats (Sm) angeordnet ist, wobei die Metaoberfläche aus der Wiederholung eines periodischen Musters ($E_1$)

in zwei Richtungen x und y, die senkrecht zueinander und parallel zu einer Oberfläche des Substrats verlaufen, gebildet ist, wobei das Muster ein Untermuster ($E_2$) umfasst, das einen ersten geradlinigen Bandabschnitt (P) in der Richtung y umfasst;

wobei die Metaoberfläche ein erstes Band (M1) aus gepunkteten Linien (P) in der Richtung y aufweist, das aus dem Untermuster gebildet ist;

wobei das periodische Muster weiterhin einen zweiten geradlinigen Bandabschnitt in der Richtung y umfasst, sodass die Metaoberfläche ein zweites durchgehendes Band (M2) in einer Richtung y aufweist, wobei die Metaoberfläche dazu ausgelegt ist, dass sie Lichtstrahlung ($L_{in}$) mit einer im genannten Spektralbereich enthaltenen Wellenlänge $\lambda$, die mit einem Einfallswinkel einfällt, entlang einer gebeugten Strahlung ($L_{diff}$) beugt, sodass sich die gebeugte Strahlung im Substrat ausbreitet und die zweite Oberfläche des Substrats (Se) unter einem gebeugten Winkel $\theta_d$ erreicht, der größer oder gleich einem Grenzwinkel $\theta_c$ der internen Gesamtbrechung zwischen dem Substrat und Wasser ist, wobei die Metaoberfläche so konfiguriert ist, dass sie für den Einfallswinkel eine Transmission der Beugungsordnung 0 von weniger als 5 % und eine Transmission der gebeugten Strahlung ($L_{diff}$), die einer Beugungsordnung -1 oder +1 entspricht, von mehr als 50 % aufweist.

2. Beugungsoptisches Element nach dem vorhergehenden Anspruch, wobei innerhalb des Musters die Fläche des ersten Bandes kleiner ist als die Fläche des zweiten Bandes und wobei eine Breite des ersten Bandes (I1) zwischen 30 nm und 500 nm beträgt, eine Breite des zweiten Bandes (12) zwischen 100 nm und 700 nm beträgt und eine Länge der gepunkteten Linie (P) zwischen 60 nm und 800 nm beträgt.

3. Beugungsoptisches Element nach einem der Ansprüche 1 oder 2, wobei das Untermuster eine Scheibe (C) umfasst, wobei die Scheibe zwischen zwei aufeinanderfolgenden gepunkteten Linien (P) des ersten Bandes angeordnet ist.

4. Beugungsoptisches Element nach einem der vorhergehenden Ansprüche, wobei die Abmessung des Musters (Px) in Richtung x derart ist, dass $P_x < \lambda/n_{Wasser}$, wobei $n_{Wasser}$ ein Brechungsindex von Wasser ist.

5. Beugungsoptisches Element nach einem der vorhergehenden Ansprüche, wobei die Gesamtabmessung der Metaoberfläche in der Richtung x ($x_{MS}$) derart ist, dass $x_{MS} < 2.e.sin\theta_d$, wobei e die Dicke des Substrats ist.

6. Beugungsoptisches Element nach einem der vorhergehenden Ansprüche, wobei die Abmessung des Musters (Py) in Richtung y zwischen 300 nm und 1000 nm beträgt.

7. Beugungsoptisches Element nach einem der vorhergehenden Ansprüche, wobei der Brechungsindex des Metaoberflächenmaterials größer ist als der Brechungsindex eines Substratmaterials.

8. Beugungsoptisches Element nach einem der vorhergehenden Ansprüche, das eine Vielzahl von Metaoberflächen ($MS_1$, $MS_2$, $MS_n$) umfasst, die auf der ersten Oberfläche des Substrats (Sm) angeordnet sind, wobei die Abmessung des Musters in der Richtung x (Px) für jede Metaoberfläche unterschiedlich ist, sodass jede Metaoberfläche dazu ausgelegt ist, Lichtstrahlung ($L_{in}$) mit der Wellenlänge, die in diesem Bereich enthalten ist und sich von der der anderen Metaoberflächen unterscheidet, zu beugen.

9. Bildgebungsvorrichtung (D1) für eine Probe durch Totalreflexions-Fluoreszenzmikroskopie, umfassend ein beugungsoptisches Element (10) nach einem der vorhergehenden Ansprüche, die Folgendes umfasst:

- mindestens eine Lichtquelle (SL), die dazu ausgelegt ist, die Lichtstrahlung ($L_{in}$) im genannten Spektralbereich, die auf das genannte beugungsoptische Element mit dem genannten Einfallswinkel einfällt, zu emittieren, wobei die durch das beugungsoptische Element gebeugte Lichtstrahlung in mindestens einer Region der zweiten Oberfläche (Se) des Substrats evaneszente Wellen (OE) erzeugt;
- eine Probe (Ech), die entsprechend mindestens einer Region der zweiten Oberfläche, in der die evaneszenten Wellen erzeugt werden, platziert ist und eine durch die evaneszenten Wellen angeregte Fluoreszenzstrahlung (Fl) erzeugt;
- einen Detektor (Det), der dazu ausgelegt ist, die von der Probe emittierte Fluoreszenzstrahlung (Fl) zu erfassen.

10. Vorrichtung zur Erfassung (D2) einer biologischen Probe durch Oberflächenplasmonenresonanz, umfassend ein beugungsoptisches Element (10) nach einem der Ansprüche 1 bis 8,

wobei das beugungsoptische Element umfasst:

- eine Vielzahl von Metaoberflächen ($MS_1$,

MS$_2$, MS$_n$,) wobei eine Abmessung des Musters in der Richtung x (Px) bei jeder Metaoberfläche unterschiedlich ist, sodass die gebeugte Strahlung (L$_{diff}$) die zweite Oberfläche des Substrats (Se) in einem Beugungswinkel $\theta_D$ erreicht, der bei jeder Metaoberfläche unterschiedlich ist,

wobei die Vorrichtung weiterhin umfasst:

- mindestens eine Lichtquelle (SL), die dazu ausgelegt ist, die Lichtstrahlung (L$_{in}$) im genannten Spektralbereich, die auf das genannte beugungsoptische Element mit dem genannten Einfallswinkel einfällt, zu emittieren,
- eine Probe (Ech), die mindestens ein zweites Substrat (S$_2$), eine über dem zweiten Substrat angeordnete metallische Schicht (Met) und eine über der Metallschicht angeordnete zu analysierenden Schicht (An) umfasst, wobei die Probe über dem ersten Substrat (SB) so angeordnet ist, dass die gebeugte Strahlung zumindest teilweise durch die metallische Schicht der Probe reflektiert wird (L$_r$);

wobei das beugungsoptische Element ferner ein optisches Kopplungselement (MS$_{out}$) umfasst, das dazu ausgelegt ist, die von der Probe reflektierte Lichtstrahlung in den freien Raum einzukoppeln;

- einen Detektor (Det), der dazu ausgelegt ist, die Intensität der von der Probe reflektierten und durch das Kopplungselement in den freien Raum eingekoppelten Lichtstrahlung zu erfassen;

mindestens eine Metaoberfläche, die so ausgelegt ist, dass der der Metaoberfläche zugeordnete Beugungswinkel bei Brechung an der metallischen Oberfläche eine resonante Anregung von Oberflächenplasmonen und eine zumindest partielle Absorption der gebeugten Strahlung (L$_{diff}$) hervorruft.

11. Vorrichtung nach dem vorhergehenden Anspruch, wobei das optische Kopplungselement mindestens eine Ausgangsmetaoberfläche umfasst, die aus der Wiederholung eines periodischen Musters (E$_1$) in zwei Richtungen x und y, die senkrecht zueinander und parallel zu einer Oberfläche des Substrats verlaufen, gebildet wird, wobei das Muster ein Untermuster (E$_2$) umfasst, das einen ersten Abschnitt eines geradlinigen, entlang y verlaufenden Bandes (P) umfasst, wobei die Ausgangsmetaoberfläche auf der ersten Oberfläche des Substrats (Sm) angeordnet ist.

net ist.

## Claims

1. A diffractive optical element (10) comprising:

- a substrate (SB) having a first surface (Sm) and a second surface (Se) opposite the first surface, transparent to light in at least one spectral range and has, in said spectral range, a refractive index higher than that of water;
- at least one metasurface (MS) made of a dielectric material and placed on said first surface (Sm) of the substrate, the metasurface being formed through the repetition of a pattern (E$_1$) that is periodic in two directions, x and y, that are perpendicular to each other and parallel to a surface of the substrate, said pattern comprising a sub-pattern (E$_2$) comprising a first strip segment (P) that is rectilinear along y, the metasurface comprising a first strip (M1) of dashes (P) in the direction y, said strip of dashes being formed from said sub-pattern, said periodic pattern further comprising a second strip segment that is rectilinear in the direction y, so that the metasurface comprises a second strip (M2) that is continuous in a direction y, said metasurface being suitable for diffracting light radiation (L$_{in}$) of wavelength $\lambda$ comprised in said spectral range, and incident with an angle of incidence, to form diffracted radiation (L$_{diff}$), said diffracted radiation being formed in such a way that it propagates through the substrate, and strikes said second surface (Se) of the substrate at a diffracted angle $\theta_d$ larger than or equal to a limit angle $\theta_c$ of total internal reflection between said substrate and water, said metasurface being configured to have, at said angle of incidence, a transmittance lower than 5% for the order of diffraction 0 and a transmittance higher than 50% for diffracted radiation (L$_{diff}$) corresponding to an order of diffraction -1 or +1.

2. The diffractive optical element as claimed in the preceding claim, wherein, within the pattern, the area of the first strip is smaller than the area of the second strip and wherein a width (11) of the first strip is comprised between 30 nm and 500 nm, a width of the second strip (l2) is comprised between 100 nm and 700 nm and a length of the dash (P) is comprised between 60 nm and 800 nm.

3. The diffractive optical element as claimed in either of claims 1 and 2, wherein the sub-pattern comprises a disk (C), said disk being placed between two successive dashes (P) of said first strip.

4. The diffractive optical element as claimed in any one of the preceding claims, wherein the dimension (Px) of the pattern in the direction x is such that $P_x < \lambda/n_{eau}$, with $n_{eau}$ a refractive index of water.

5. The diffractive optical element as claimed in any one of the preceding claims, wherein the total dimension $x_{MS}$ of the metasurface in the direction x is such that $x_{MS} < 2. e. \sin\theta_d$, with e a thickness of the substrate.

6. The diffractive optical element as claimed in any one of the preceding claims, wherein the dimension (Py) of the pattern in the direction y is comprised between 300 nm and 1000 nm.

7. The diffractive optical element as claimed in any one of the preceding claims, wherein the refractive index of the material of the metasurface is higher than the refractive index of a material of the substrate.

8. The diffractive optical element as claimed in any one of the preceding claims, comprising a plurality of metasurfaces ($MS_1$, $MS_2$, $MS_n$) placed on said first surface (Sm) of the substrate, a dimension (Px) in said direction x of the pattern of each metasurface being different, so that each metasurface is suitable for diffracting light radiation ($L_{in}$) of wavelength comprised in said range and different from the wavelength diffracted by the other metasurfaces.

9. A device (D1) for imaging a sample by total-internal-reflection-fluorescence microscopy comprising a diffractive optical element (10) as claimed in any one of the preceding claims and comprising:

   - at least one light source (SL) suitable for emitting, in said spectral range, said light radiation ($L_{in}$) incident on said diffractive optical element with said angle of incidence,
   said light radiation, after diffraction by said diffractive optical element, producing evanescent waves (OE) in at least one region of the second surface (Se) of the substrate;
   - a sample (Ech) placed in correspondence with at least one region of the second surface where said evanescent waves are produced and generating fluorescence radiation (FI) excited by said evanescent waves;
   - a detector (Det) suitable for detecting said fluorescence radiation (FI) emitted by said sample.

10. A device (D2) for detecting a biological sample via surface plasmon resonance comprising a diffractive optical element (10) as claimed in any one of claims 1 to 8, said diffractive optical element comprising:

   - a plurality of metasurfaces ($MS_1$, $MS_2$, $MS_n$), a dimension (Px) in said direction x of the pattern of each metasurface being different, so that the radiation ($L_{diff}$) diffracted by each metasurface strikes said second surface (Se) of the substrate at a different diffracted angle $\theta_d$;

said device further comprising:

   - at least one light source (SL) suitable for emitting, in said spectral range, said light radiation ($L_{in}$) incident on said diffractive optical element with said angle of incidence;
   - a sample (Ech) comprising at least a second substrate ($S_2$), a metal layer (Met) placed above the second substrate and a layer (An) to be analyzed placed above the metal layer, said sample being placed above the first substrate (SB) so that said diffracted radiation is reflected ($L_r$) at least partially by the metal layer of the sample, said diffractive optical element further comprising an optical coupling element ($MS_{out}$) suitable for coupling said light radiation reflected by the sample to free space;
   - a detector (Det) suitable for detecting the intensity of said light radiation reflected by the sample and coupled to free space by said coupling element,
   at least one metasurface being configured so that said diffracted angle associated with the metasurface produces, on reflection from the metal surface, a resonant excitation of surface plasmons and an at least partial absorption of said diffracted radiation ($L_{diff}$).

11. The device as claimed in the preceding claim, wherein said optical coupling element comprises at least one exit metasurface formed through the repetition of a pattern ($E_1$) that is periodic in two directions, x and y, that are perpendicular to each other and parallel to a surface of the substrate, said pattern comprising a sub-pattern ($E_2$) comprising a first strip segment (P) that is rectilinear along y, said exit metasurface being placed on said first surface (Sm) of the substrate.

[Fig.1A]

FIG.1A

[Fig.1B]

FIG.1B

[Fig.2]

FIG.2

[Fig.3A]

FIG.3A

[Fig.3B]

FIG.3B

[Fig.4A]

FIG. 4A

[Fig.4B]

FIG.4B

[Fig.5]

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014003529 A2

- WO 2010032157 A1

**Littérature non-brevet citée dans la description**

- **BERNARDO S MENDOZA et al.** Tailored Optical Polarization in Nano-Structured Metamaterials. CORNELL UNIVERSITY LIBRARY, 20160404